# EUROPÄISCHE PATENTANMELDUNG

(11) **EP 1 079 554 A2**
(43) Veröffentlichungstag der Anmeldung: **28.02.2001**
(21) Anmeldenummer: 00116685.9
(22) Anmeldetag: 02.08.2000
(51) Int. Cl.: H04B 17/00

(54) **Funkempfangstester**

(30) Priorität: 20.08.1999 DE 29914606 U
(71) Anmelder: Diehl Controls Nürnberg GmbH & Co. KG, 90451 Nürnberg (DE)
(72) Erfinder: Zimmermann, Jürgen, 90453 Nürnberg (DE)
(74) Vertreter: Hofmann, Gerhard, Dipl.-Ing. Patentassessor

(57) **Zusammenfassung**

Es wird ein Gerät zur Messung der Empfangsqualität eines für Funkuhren bestimmten Zeitzeichen-Funksignals vorgeschlagen. Das Gerät ist batteriebetrieben, weist eine elektromagnetische Strahlung aufnehmende Antenne (1), einen ein Zeitzeichen-Funksignal demodulierenden Empfänger (3), eine Singalverarbeitungsstufe, in der das Signal-zu-Rausch-Verhältnis des demodulierten Signals ermittelt wird, und Anzeigemittel (7), durch die die Qualität des empfangenen Funksignals in Form des Signal-zu-Rausch-Verhältnisses angezeigt wird, auf Die Signalverarbeitungsstufe wird durch einen Microprozessor (5) gebildet, vergleicht das demodulierte Funksignal mit einem in einem Speicher (6) hinterlegten idealen Soll-Signal und bestimmt daraus das Signal-zu-Rausch-Verhältnis des empfangenen Funksignals.

## Beschreibung

Die Neuerung betrifft ein Gerät zur Messung der Empfangsqualität eines für Funkuhren bestimmten Zeitzeichen-Funksignals nach dem Oberbegriff des Anspruchs 1.

Immer mehr Gebrauchsuhren, aber auch Schaltuhren werden heutzutage als Funkuhren gefertigt. Diese besitzen eine Antenne und einen Funkempfänger, mit dem sie das Zeitzeichen-Funksignal des Langwellensenders DCF 77, der bei Frankfurt am Main steht und mit einer Reichweite von über 1.500km sendet, empfangen können. Aus dem Signal dieses Senders ist das Datum und vor allem die aktuelle Uhrzeit sekundengenau zu bestimmen. Damit zeigen Funkuhren stets die richtige Zeit an und stellen sich z. B. auch automatisch von Winter- auf Sommerzeit um.

Bei stationären Funkuhren (z. B. Wanduhren oder fest installierten Schalt- bzw. Regeluhren) tritt das Problem auf, die Antenne so zu positionieren, daß ein möglichst guter Funkempfang gegeben ist. Funkabschattungen oder Störungen durch eine Vielzahl elektrischer Geräte (z. B. Fernseher, Computer) können den Empfang des Zeitzeichen-Funksignals so beeinträchtigen, daß ein ordnungsgemäßer Betrieb der Funkuhren nicht möglich ist.

Bei heute üblichen Gebrauchsuhren ist deshalb eine Anzeige vorgesehen, wenn das Zeitzeichen-Funksignal aufgrund von Störungen bzw. aufgrund schlechter Empfangsqualität nicht korrekt ausgewertet werden konnte. Der Benutzer muß dann für diese Funkuhr einen neuen Aufstellungsort suchen.

Desweiteren sind Empfangstester bekannt, bei denen die Feldstärke des empfangenen Funksignals angezeigt wird. Dabei wird ein analoger Ausgang des Empfängers verwendet, der ein sogenanntes Feldstärkeproportional (RSSI: relativ signal strength indicator) liefert. Der Nachteil dieser Empfangstester liegt darin, daß allein die Größe der Feldstärke des empfangenen Signals angezeigt wird, unabhängig davon, ob eine Störung (z. B. durch Fernseher, Computer, Datenleitung, Störsender, störende Defektgeräte) vorliegt, welche zwar Feldstärke liefert, aber das Zeitzeichen-Funksignal stört oder gar unleserlich macht. Somit sind diese Empfangstester zur Messung der Qualität des Zeitzeichen-Funkempfangs nicht gut geeignet.

Ausgehend von diesem Stand der Technik liegt der Neuerung die Aufgabe zugrunde, einen Funkempfangstester vorzuschlagen, der die Empfangsqualität des Zeitzeichen-Funksignals mißt und zur Anzeige bringt.

Diese Aufgabe wird durch ein Gerät mit den Merkmalen des Anspruchs 1 gelöst. Weiterbildungen und Ausführungsformen ergeben sich aus den Unteransprüchen 2 bis 5.

Der vorgeschlagene Funkempfangstester weist zusätzlich zum Empfänger eine Signalverarbeitungsstufe auf, die das vom Empfänger demodulierte Zeitsignal analysiert und daraus das Signal-zu-Rausch-Verhältnis bestimmt. Dieses Signal-zu-Rausch-Verhältnis ist ein Maß für die Qualität des empfangenen Funksignals und wird durch geeignete Anzeigemittel zur Anzeige gebracht.

Vorzugsweise ist die Signalverarbeitungsstufe durch einen Microprozessor gebildet. In einer ebenso bevorzugten Ausführungsform wird das demodulierte Funksignal in der Signalverarbeitungsstufe mit einem idealen Soll-Signal, welches in einem Speicher hinterlegt ist, verglichen und aus diesem Vergleich das Signal-zu-Rausch-Verhältnis des empfangenen Funksignals bestimmt.

In Weiterbildung sind die Anzeigemittel so ausgestaltet, daß das Signal-zu-Rausch-Verhältnis in einer analogen und/oder mehrstufigen digitalen Anzeige angezeigt wird. Die Anzeigemittel sind vorzugsweise durch mehrere Leuchtdioden gebildet, wobei bei sehr gutem Empfang alle Leuchtdioden leuchten, aber desto weniger Leuchtdioden leuchten, je schlechter der Funkempfang ist. Dabei ist bevorzugt vorgesehen, daß die guten Empfang anzeigenden Leuchtdioden grünes, die schlechteren Empfang anzeigenden gelbes und die schlechten oder gar keinen Empfang anzeigenden totes Licht aussenden.

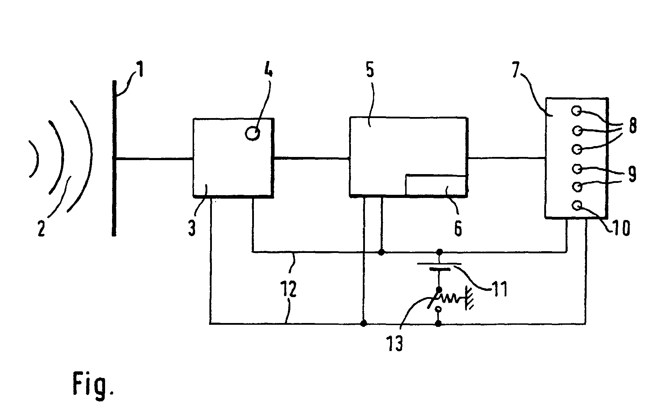

Im folgenden soll anhand der Zeichnung ein Ausführungsbeispiel der Neuerung naher beschrieben werden. Die einzige Figur zeigt ein Blockschaltbild des vorgeschlagenen Empfangstesters.

Eine Antenne 1 empfängt die Zeitzeichen-Funksignale 2 des nicht gezeigten Langwellensenders DCF 77. Das empfangene Funksignal gelangt in einen Empfänger 3. Der Empfang eines Funksignals wird durch das Leuchten einer (grünen) Leuchtdiode 4 angezeigt. Weiterhin wird im Empfänger 3 das Funksignal demoduliert. Das demodulierte Zeitsignal gelangt in einen Microprozessor 5, der als Signalverarbeitungsstufe dient. Der Microprozessor 5 weist einen nicht flüchtigen Speicher 6 auf, in welchem ein ideales Soll-Signal gespeichert ist. Mit diesem idealen Soll-Signal wird das demodulierte Zeitsignal verglichen und aus diesem Vergleich das Signalzu-Rausch-Verhältnis des empfangenen Zeitsignals bestimmt. Diese Vorgänge finden im Microprozessor 5 statt.

Je nach der Größe des Signal-zu-Rausch-Verhältnisses, welches ein Maß für die Qualität des empfangenden Signals ist, werden vom Microprozessor 5 in der Anzeigeeinheit 7 mehrere Leuchtdioden 8, 9 und 10 unterschiedlich angesteuert. Diese Ansteuerung erfolgt derart, daß bei sehr schlechtem bzw. 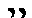 nicht leserlichem" Empfang nur die rote Leuchtdiode 10 brennt, wohingegen bei schlechtem Empfang, bei dem in der Auswertung des Zeitsignals noch vermehrt Bitfehler auftreten würden, zusätzlich eine oder beide gelben Leuchtdioden 9 leuchten und bei befriedigendem bis sehr guten Empfang zusätzlich noch eine bis alle grünen Leuchtdioden 8 leuchten. Auf diese Weise kann die Qualität des empfangenen Zeitzeichen-Funksignals demnach in sechs Stufen angezeigt werden.

Die zum Betrieb des Funkempfangstesters notwendige elektrische Energie liefert eine Batterie 11, mit der der Empfänger 3, der Mircoprozessor 5 und die Anzeigeeinheit 7 über Stromleitungen 12 verbunden sind. Desweiteren ist ein Schalter 13 vorgesehen, mit welchem der Funkempfangstester in Betrieb genommen wird. Dieser Schalter ist als Druckschalter ausgeführt, damit der Funkempfangstester nur so lange eingeschaltet bleibt, wie der Schalter 13 eingedrückt wird.

## Patentansprüche

1. Gerät zur Messung der Empfangsqualität eines für Funkuhren bestimmten Zeitzeichen-Funksignals, wobei das Gerät batteriebetrieben ist und eine elektromagnetische Strahlung aufnehmende Antenne sowie einen ein elektromagnetisches Funksignal demodulierenden Empfänger aufweist,
dadurch gekennzeichnet,
daß in dem Gerät eine Signalverarbeitungsstufe, in der das Signal-zu-Rausch-Verhältnis und/oder Signal-zu-Störungs-Verhältnis des demodulierten Funksignals ermittelbar ist, und Anzeigemittel (7), durch die die Qualität des empfangenen Funksignals in Form des Signal-zu-Rausch-Verhältnisses anzeigbar ist, vorgesehen sind.

2. Gerät nach Anspruch 1,
dadurch gekennzeichnet,
daß die Signalverarbeitungsstufe durch einen Microprozessor (5) gebildet ist, in dem das demodulierte Funksignal analysierbar ist.

3. Gerät nach Anspruch 1 oder 2,
dadurch gekennzeichnet,
daß in der Signalverarbeitungsstufe das demodulierte Funksignal mit einem in einem Speicher (6) hinterlegten, idealen Soll-Signal vergleichbar und daraus das Signal-zu-Rausch-Verhältnis des empfangenen Funksignals bestimmbar ist.

4. Gerät nach einem der Ansprüche 1 bis 3,
dadurch gekennzeichnet,
daß die Anzeigemittel (7) so ausgeführt sind, daß das Signal-zu-Rausch-Verhältnis in einer analogen und/oder mehrstufigen digitalen Anzeige anzeigbar ist.

5. Gerät nach einem der vorhergehenden Ansprüche,
dadurch gekennzeichnet,
daß die Anzeigemittel (7) durch mehrere Leuchtdioden (8, 9, 10) gebildet sind, wobei bei schlechtem oder nicht vorhandenen Funkempfang nur eine, vorzugsweise rote (10), oder gar keine Leuchtdiode leuchtet, aber desto mehr, vorzugsweise zusätzlich gelbe (9) und grüne (8) Leuchtdioden leuchten, je besser der Funkempfang ist.
